# EUROPEAN PATENT APPLICATION

(11) **EP 4 246 488 A1**
(43) Date of publication of application: **20.09.2023**
(21) Application number: 23160710.2
(22) Date of filing: 08.03.2023
(51) Int. Cl.: G08G 1/09, G08G 1/16, B60W 50/14

(54) **INFORMATION PROMPT SYSTEM AND METHOD**

(30) Priority: 17.03.2022 CN 202210268009
(71) Applicant: Beijing Tusen Zhitu Technology Co., Ltd., Beijing 100016 (CN)
(72) Inventor: PENG, Rui, Beijing, 100016 (CN); JI, Pingyuan, Beijing, 100016 (CN)
(74) Representative: Murgitroyd & Company

(57) **Abstract**

An information prompt system and method for a vehicle are provided. The information prompt system includes a vehicle control apparatus, configured to acquire a planned traveling state of the vehicle and control the vehicle to enter the planned traveling state, and further configured to in response to the fact that at least one of the planned traveling state, a vehicle state, a driving mode state and a task state changes, generate a corresponding prompt information generation instruction based on the type of change; an information analysis apparatus, configured to acquire the prompt information generation instruction and determine prompt information according to the prompt information generation instruction; and an information prompt apparatus, configured to display the prompt information.

## Description

The present disclosure claims priority to Chinese Patent Application No. 202210268009.5, titled "INFORMATION PROMPT SYSTEM AND METHOD FOR UNMANNED VEHICLE", filed on March 17, 2022.

### TECHNICAL FIELD

The present disclosure relates to the technical field of autonomous driving, and in particular to an information prompt system and method for an autonomous vehicle.

### BACKGROUND

With the development of autonomous technology, more and more unmanned vehicles have been put into use. The unmanned vehicle is also called a non-manned vehicle or an autonomous vehicle, and means that the vehicle can automatically control its motion according to the sensing and understanding of the vehicle on the surrounding environment conditions and can reach the driving level of human drivers. In the autonomous driving process, surrounding pedestrians and vehicles have difficulty in knowing the vehicle condition of the autonomous vehicle due to the absence of human drivers. Therefore, when an abnormality or failure occurs in the vehicle, the autonomous vehicle needs to transmit prompt information in time to prompt the surrounding environment (pedestrians, other vehicles, etc.). If the prompt information is not sent in time or cannot be sent, traffic accidents are easily caused.

Therefore, how to enable the autonomous vehicle to transmit prompt information in time to surrounding pedestrians and vehicles in the traveling process of the autonomous vehicle has become a research focus of the autonomous technology.

### SUMMARY

According to an aspect of the present disclosure, the present disclosure first provides an information prompt system for a vehicle (e.g. an autonomous vehicle), which comprises: a vehicle control apparatus, configured to acquire a planned traveling state of the vehicle and control the vehicle to enter the planned traveling state, and further configured to in response to at least one of the planned traveling state, a vehicle state, a driving mode state and a task state being changed, generate a prompt information generation instruction based on the change; an information analysis apparatus, configured to acquire the prompt information generation instruction and determine prompt information corresponding to the prompt information generation instruction; and an information prompt apparatus, configured to display the prompt information.

According to another aspect of the present disclosure, the present disclosure further provides an information prompt method for an vehicle (e.g. an autonomous vehicle), which comprises: acquiring, by a vehicle control apparatus, a planned traveling state of the vehicle; in response to at least one of the planned traveling state, a vehicle state, a driving mode state and a task state being changed, generating, by the vehicle control apparatus, a prompt information generation instruction based on the change; acquiring, by an information analysis apparatus from the vehicle control apparatus, the prompt information generation instruction; determining, by the information analysis apparatus, prompt information according to the prompt information generation instruction; and displaying, by an information prompt apparatus, the prompt information.

According to another aspect of the present disclosure, the present disclosure further provides a vehicle (e.g. an autonomous vehicle), which comprises the information prompt system of the present disclosure.

According to one or more embodiments of the present disclosure, the prompt information generation instruction is generated by the vehicle control apparatus. Since the hardware circuit of the vehicle control apparatus has a relatively simple structure, the vehicle control apparatus is more reliable and less prone to malfunction than the computing apparatus that needs to compute a traveling strategy. Therefore, the above prompt information generation instruction generated by the vehicle control apparatus is more reliable, and the vehicle is prevented from being forced to exit the autonomous driving mode due to the fact that the prompt information cannot be displayed. In addition, the information prompt function is realized by the vehicle control apparatus, such that when the computing apparatus fails, the outside can still know the failure event, so that a traffic accident is avoided.

### BRIEF DESCRIPTION OF THE DRAWINGS

The accompanying drawings illustrate the exemplary embodiments and constitute a part of the specification, and, together with the text description of the specification, are provided to illustrate the exemplary implementations of the embodiments. The illustrated embodiments are for purposes of example only and do not limit the scope of the claims. Throughout the accompanying drawings, identical reference numerals designate similar, but not necessarily identical, elements.
FIG. 1 shows a schematic diagram of an exemplary system in which the various methods and apparatuses described herein may be implemented according to an embodiment of the present disclosure;
FIG. 2 shows a schematic structural diagram of an information prompt system for an autonomous vehicle according to an embodiment of the present disclosure;
FIG. 3 shows a schematic structural diagram of an information prompt system according to another embodiment of the present disclosure;
FIG. 4 shows a schematic diagram of a prompt information mapping table according to an embodiment of the present disclosure;
FIG. 5 shows a flowchart of an information prompt method for an autonomous vehicle according to an embodiment of the present disclosure;
FIG. 6 shows a flowchart of an information prompt method for an autonomous vehicle according to another embodiment of the present disclosure; and
FIG. 7 shows a block diagram illustrating an exemplary computing device that can be used in an exemplary embodiment.

### DETAILED DESCRIPTION

In the present disclosure, unless otherwise specified, the terms "first", "second", etc., are used for describing various elements and are not intended to define a positional relationship, a temporal relationship or an importance relationship of these elements, and such terms are used only for distinguishing one element from another. In some examples, a first element and a second element may refer to the same instance of the element, while in some cases they may refer to different instances based on the context of the description.

The terms used in the description of the various described examples in the present disclosure are for the purpose of describing particular examples only and are not intended to be limiting. Unless otherwise clearly indicated in the context, if the number of elements is not specifically limited, there may be one or a plurality of elements. Furthermore, the term "and/or" used herein encompasses any of and all possible combinations of the listed items.

In the description of various embodiments of the present disclosure, the term "vehicle" is to be interpreted broadly in the present application to one including any moving objects, including, for example, an automobile, a truck, a van, a semi-trailer, a golf cart, an off-road vehicle, a warehouse transportation vehicle or a farm vehicle, and a transportation vehicle that travels on rails, such as a tram or a train, and other rail vehicles.

Embodiments of the present disclosure will be described in detail below with reference to the accompanying drawings.

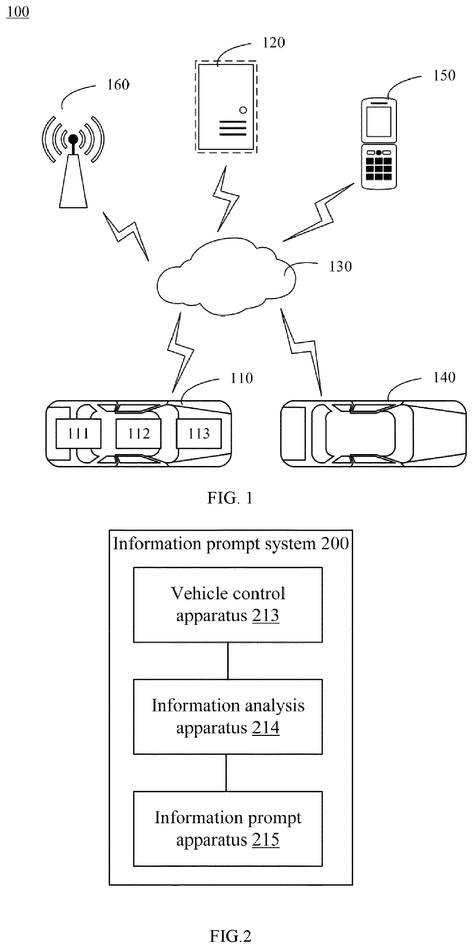

FIG. 1 shows a schematic diagram of an exemplary system 100 in which the various methods and apparatuses described herein may be implemented according to an embodiment of the present disclosure. Referring to FIG. 1, the system 100 comprises an autonomous vehicle 110, a server 120, and one or more communication networks 130 through which the autonomous vehicle 110 is in communicative connection with the server 120.

The server 120 may run such that a traveling strategy related to the autonomous vehicle 110 can be generated. In some embodiments, the server 120 may further provide other services or software applications that may comprise non-virtual environments and virtual environments. In the configuration shown in FIG. 1, the server 120 may comprise one or more components that implement the functions executed by the server 120. These components may include software components, hardware components, or a combination thereof, which may be executed by one or more processors. A user of the autonomous vehicle 110 may utilize one or more client applications to interact with the server 120 so as to take advantage of the services provided by these components. It should be understood that a variety of different system configurations are possible, which may differ from the system 100. Accordingly, FIG. 1 is one example of the system for implementing the various methods described herein, and is not intended to be limiting. It should be added that the "unmanned vehicle" (i.e. autonomous vehicle) of the present disclosure may refer to a vehicle having an autonomous driving function, and is not necessarily limited to a vehicle without a driver or passengers.

In various embodiments, the server 120 may run one or more services or software applications that provide the functions described below. The computing device of the server 120 may run one or more operating systems of any commercially-available server operating system. In some implementations, the server 120 may comprise one or more applications to analyze and consolidate data feeds and/or event updates received from the autonomous vehicle 110. The server 120 may further comprise one or more applications to display data feeds and/or real-time events via one or more display devices of the autonomous vehicle 110.

The network 130 may be any type of network known to those skilled in the art that may support data communications using any of a variety of available protocols, including but not limited to TCP/IP, SNA, IPX, etc. By way of example only, one or more networks 110 may be a satellite communication network, a local area network (LAN), an Ethernet-based network, a token ring, a wide area network (WAN), the Internet, a virtual network, a virtual private network (VPN), an intranet, an extranet, a public switched telephone network (PSTN), an infrared network, a wireless network (including, e.g., bluetooth and WiFi), and/or any combination of these and other networks.

The autonomous vehicle 110 may comprise various sensors 111 for sensing the surrounding environment. The various sensors 111 may include one or more of the following sensors: a visual camera, an infrared camera, an ultrasonic sensor, a radar (e.g. a millimeter-wave radar), and a LiDAR. Different sensors may provide different detection accuracies and ranges. The camera may be mounted in the front of, in the rear of, or other locations of the vehicle. The visual camera may capture the conditions inside and outside the vehicle in real time and present them to the driver and/or passengers. In addition, through the analysis of the pictures captured by the visual camera, information, such as traffic light indication, intersection situation and other vehicle operation state, can be acquired. The infrared camera can capture objects under night vision conditions. The ultrasonic sensor may be mounted on the periphery of the vehicle and used for measuring the distance between an object outside the vehicle and the vehicle by utilizing the characteristics of strong ultrasonic directionality and the like. The millimeter-wave radar may be mounted in the front of, in the rear of, or other locations of the vehicle for measuring the distance between an object outside the vehicle and the vehicle using the characteristics of electromagnetic waves. The LiDAR may be mounted in the front of, in the rear of, or other locations of the vehicle for detecting object edges and shape information so as to perform object detection and tracking.

The autonomous vehicle 110 may further comprise a communication apparatus 112. The communication apparatus 112 may comprise a satellite positioning module capable of receiving satellite positioning signals from satellites and generating coordinates based on these signals. The communication apparatus 112 may further comprise a module to communicate with a mobile communication base station 160. The communication apparatus 112 may further be configured to implement, for example, vehicle-to-vehicle communication with another vehicle 140. Furthermore, the communication apparatus 112 may further comprise a module to communicate with a user terminal 150. The autonomous vehicle 110 may further be connected to the server 120 via a network 130 using the communication apparatus 112.

The autonomous vehicle 110 may further comprise a vehicle control apparatus 113. The vehicle control apparatus 113 may comprise a processor that communicates with various types of computer-readable storage apparatuses or media. The vehicle control apparatus 113 may be used for controlling various actuators of the autonomous vehicle. The vehicle control apparatus 113 is configured to be in communicative connection with a chassis of the autonomous vehicle 110 so as to control a powertrain, a steering system, a braking system and the like in the autonomous vehicle 110 so as to respectively control acceleration, steering and braking, without human intervention or with only limited human intervention. The autonomous vehicle 110 may further include an information analysis apparatus, an information prompt apparatus, a computing apparatus, a vehicle chassis, and a vehicle control network, which will be described in detail in the following.

The system 100 of FIG. 1 may be configured and operated in various manners such that the various methods described according to the present disclosure and the information prompt system applicable to the present disclosure can be applied.

According to an aspect of the present disclosure, an information prompt system 200 for an autonomous vehicle (e.g. the autonomous vehicle 110 shown in FIG. 1) is provided. FIG. 2 shows a schematic structural diagram of an information prompt system 200 for an autonomous vehicle according to an embodiment of the present disclosure. As shown in FIG. 2, the information prompt system 200 comprises: the vehicle control apparatus 213, the information analysis apparatus 214, and the information prompt apparatus 215. The vehicle control apparatus 113 as shown in FIG.1 is an example of the vehicle control apparatus 213.

The vehicle control apparatus 213 is configured to acquire a planned traveling state of the autonomous vehicle 110 and control the autonomous vehicle 110 to enter the planned traveling state, and the vehicle control apparatus 213 is further configured to in response to the fact that at least one of the planned traveling state, a vehicle state, a driving mode state and a task state changes, generate a corresponding prompt information generation instruction based on the change. The information analysis apparatus is configured to acquire the prompt information generation instruction and determine prompt information according to the prompt information generation instruction. The information prompt apparatus 215 is configured to display the prompt information.

In this embodiment, the vehicle control apparatus 213 may be a vehicle control unit (VCU) that is mainly composed of hardware that comprises a housing and hardware circuits, and software that is divided into application software and underlying software. The VCU housing is mainly used for protecting and sealing the hardware circuits, and meets both the cleanliness requirements of water resistance, dust prevention and the like, and the mechanical requirements of preventing falling, vibration and the like. The hardware circuits are mainly composed of a master control chip (e.g., a 32-bit processing chip), a peripheral clock circuit, a reset circuit and a power module, and is generally provided with a digital signal/analog signal processing circuit, a frequency signal processing circuit, a communication interface circuit and the like. The application software and the underlying software are generally written in the C language. The application software is mainly responsible for an upper-layer control strategy and is mainly responsible for controlling the energy flow direction and distribution proportion in real time according to the vehicle state and the intention of a driver. The underlying software is mainly responsible for initialization setting of the single chip microcomputer, real-time receiving and transmitting of CAN bus signals and real-time processing and diagnosis of input and output signals. The vehicle control apparatus 213 is mainly used for controlling the vehicle operation according to a set vehicle traveling strategy. Although in this embodiment, the vehicle control apparatus 213 is shown as a vehicle control unit (VCU), in other embodiments of the present disclosure, the vehicle control apparatus 213 may be other types of apparatuses for controlling the operation of the vehicle.

In the related art, a prompt information generation instruction for controlling the information prompt apparatus 215 to display prompt information is generated in a related computing apparatus which is used for computing and determining a traveling strategy or a planned traveling state of the autonomous vehicle 110 at the same time. It can be understood that, since the computing apparatus undertakes the main function of the autonomous driving, if the information prompt function is also implemented by the computing apparatus, then when the computing apparatus fails, the prompt information cannot be output to the outside, so that the current state of the autonomous vehicle 110 cannot be known by the outside, which is very likely to cause a traffic accident. For example, the computing apparatus generally needs to be connected to the related server 120 to acquire the traveling strategy calculated by the server 120, and once the server 120 fails or the communication connection with the server 120 is in trouble, the computing apparatus loses the function of generating the prompt information generation instruction. For the autonomous vehicle 110, information prompt is an important means to interact with other objects on the road (e.g., other vehicles or pedestrians), and once the prompt information cannot be displayed, the autonomous vehicle 110 can only exit the autonomous driving mode for the sake of safety.

According to one or more embodiments of the present disclosure, the above prompt information generation instruction is generated by the vehicle control apparatus 213. As described above, the hardware circuits of the vehicle control apparatus 213 are mainly composed of the master control chip which has a relatively simple structure, and the vehicle control apparatus 213 is more reliable and less prone to malfunction compared to the computing apparatus that needs to compute the traveling strategy. In addition, the information prompt function can be realized by the vehicle control apparatus, so that even when the computing apparatus fails, the outside can still know the failure event, so that a traffic accident is avoided. Therefore, the above prompt information generation instruction generated by the vehicle control apparatus 213 is more reliable, and the autonomous vehicle 110 is prevented from being forced to exit the autonomous driving mode due to the fact that the prompt information cannot be displayed.

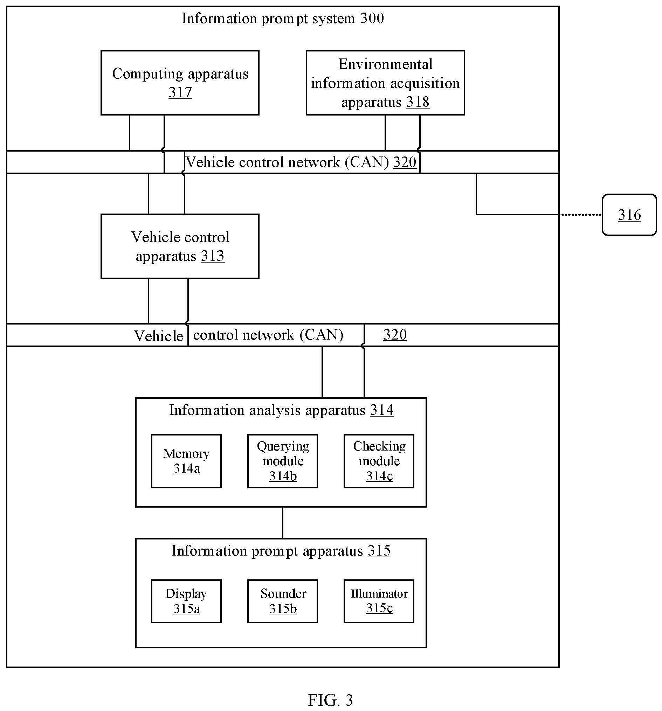

FIG. 3 shows a schematic structural diagram of an information prompt system 300 for an autonomous vehicle (e.g. the autonomous vehicle 110 shown in FIG. 1) according to another embodiment of the present disclosure. As shown in FIG. 3, the information prompt system 300 further comprises, in addition to the vehicle control apparatus 313, the information analysis apparatus 314 and the information prompt apparatus 315: an environmental information acquisition apparatus 318, a computing apparatus 317, a vehicle chassis 316, and a vehicle control network 320. The vehicle control apparatus 213, the information analysis apparatus 214, and the information prompt apparatus 215 shown in FIG.2 are examples of the vehicle control apparatus 313, the information analysis apparatus 314 and the information prompt apparatus 315, respectively. The environmental information acquisition apparatus 318 may comprise various sensors 111 for sensing the surrounding environment as described above in connection with FIG. 1. The various sensors 111 may include one or more of the following sensors: a visual camera, an infrared camera, an ultrasonic sensor, a millimeter-wave radar, and a LiDAR. The environmental information acquisition apparatus 318 is configured to acquire environmental information around the autonomous vehicle 110. For example, the ultrasonic sensor of the various sensors 111 can measure the distance between the object outside the vehicle and the vehicle by utilizing the characteristics of strong ultrasonic directivity and the like. It should be noted that, although in this embodiment, the vehicle control network 320 is shown as a controller area network (CAN); in other embodiments of the present disclosure, the vehicle control network 320 may be other types of local area networks (LANs) other than the controller area network.

The computing apparatus 317 is configured to acquire the environmental information and determine the planned traveling state of the autonomous vehicle 110 based on the environmental information for acquisition by the vehicle control apparatus 313. The planned traveling state includes at least one of the followings: stopping/starting operation of the vehicle, the current traveling speed of the vehicle, acceleration/deceleration of the vehicle and forward/backward movement of the vehicle; changing lanes and changing directions of the vehicle; and vehicle turning and turning direction of the vehicle. The computing apparatus 317 may determine the follow-up traveling strategy of the autonomous vehicle 110 based on the distance between the object outside the vehicle and the vehicle obtained by the above measurement, or the like. For example, when the detected distance is relatively short, the planned traveling state may be set as decelerated traveling to avoid collision with an object outside the vehicle. When the detected distance is relatively long, the planned traveling state may be set as accelerated traveling to improve the traveling speed of the vehicle. When the occurrence of a curve ahead is detected, the planned traveling state may be set as turning or the like. Determining the planned traveling state of the autonomous vehicle 110 based on the environmental information is well known to those skilled in the art of autonomous driving and will not be described in detail herein.

In some embodiments of the present disclosure, the computing apparatus 317 may be further in communicative connection with the server 120 shown in FIG. 1, for example, the computing apparatus 317 may be in communicative connection with the server 120 via the communication apparatus 112 of the autonomous vehicle 110. The computing apparatus 317 may upload the environmental information data acquired by the environmental information acquisition apparatus 318 to the server 120, and the related components of the server 120 will run the related applications that generate the planned traveling state and will generate the result (i.e., the planned traveling state of the autonomous vehicle 110). The computing apparatus 317 may acquire the running result of the server 120 to obtain the planned traveling state of the autonomous vehicle 110. It can be understood that while in some embodiments, the related data for the planned traveling state are generated by the server 120, in other embodiments, at least a portion of the related data for the planned traveling state may be generated locally by the computing apparatus 317 at the autonomous vehicle 110.

After the computing apparatus 317 determines the planned traveling state of the autonomous vehicle 110, related data may be transmitted to the vehicle control network 320. The vehicle control network 320 is a local area network in the autonomous vehicle 110 for data transmission between various components inside the vehicle. The vehicle control apparatus 313 may subsequently acquire related data of the planned traveling state from the vehicle control network 320 and generate control instructions for controlling the vehicle chassis 316. The vehicle control apparatus 313 is in communicative connection with the vehicle chassis 316 via the vehicle control network 320, and the vehicle control apparatus 313 may send the above control instructions to the vehicle chassis 316 to control various actuators of the vehicle chassis 316. For example, the vehicle control apparatus 313 may control a powertrain, a steering system, a braking system and the like in the vehicle chassis 316 so as to respectively control acceleration, steering and braking, thereby achieving autonomous driving without human intervention or with only limited human intervention.

As described above, the vehicle control apparatus 313 is further configured to in response to the fact that at least one of the planned traveling state, a vehicle state, a driving mode state and a task state changes, generate a corresponding prompt information generation instruction based on the type of change. The vehicle control apparatus 313 may acquire various information described above, and as described above, the vehicle control apparatus 313 may obtain the planned traveling state via the vehicle control network 320. The vehicle control apparatus 313 may also acquire other information such as vehicle state information, driving mode state information, and/or task state information from the vehicle control network 320 or other components of the autonomous vehicle 110. For example, the autonomous vehicle 110 may additionally comprise a detection unit (not shown in FIG. 3) for detecting the vehicle state (e.g., a state of each component of the vehicle), wherein the detection unit may also transmit detection data to the vehicle control network 320, and the vehicle control apparatus 313 may acquire the above vehicle state via the vehicle control network 320. Other information such as driving mode state information and/or task state information may also be obtained by the vehicle control apparatus 313 in other similar ways and will not be described in detail herein.

The vehicle state information may include state information of vehicle components, such as operating states, health states and the like of various components of the vehicle. The driving mode state may include: an unmanned driving mode (i.e. autonomous driving mode), a manual driving mode, or a controlled driving mode. About the task state, the autonomous vehicle 110 receives task state information from an external task management system.

The vehicle control apparatus 313 may determine in real time (or at specific time intervals, e.g., 0.1 s) that at least one of the planned traveling state, the vehicle state, the driving mode state and the task state changes, and generate a corresponding prompt information generation instruction based on the change (e.g., the type of change). Specifically, successively detected states may be compared to each other to obtain the above change. Taking the planned traveling state as an example, when the planned traveling state is changed from deceleration to acceleration, the "type of change" may be determined as a type of "accelerated traveling", and when the planned traveling state is changed from horizontal traveling to turning, the "type of change" may be determined as a type of "turning", and the like. As another example, in some application scenes, the autonomous vehicle 110 may perform some tasks, such as a transportation task. In these scenes, the autonomous vehicle 110 is usually additionally provided with a task management system which allocates a task to the autonomous vehicle 110, sends the task to the autonomous vehicle 110, monitors the autonomous vehicle 110 to execute the task, and confirms the task completion to the autonomous vehicle 110 after the autonomous vehicle 110 completes the task. During the communication of the task management system with the autonomous vehicle 110, the execution of the task may be communicated with the autonomous vehicle 110, for example, state information of the task may be sent to the autonomous vehicle 110, and the state information of the task may include: the starting state of the task, the proceeding state of the task, the ending state of the task and other states set according to the application scene. For example, when the task state is changed from the starting state to the proceeding state, the above "type of change" may be determined as a type of "task starts proceeding ", and when the task state is changed from the proceeding state to the ending state, the above "type of change" may be determined as a type of "task has ended", and the like. The prompt information generation instruction generated by the vehicle control apparatus 313 corresponds to the types of these changes such that the corresponding prompt information is generated subsequently. The prompt information generation instruction may be composed of a simple set of hexadecimal data, which may further contain multiple pieces of sub-data.

As shown in FIG. 3, the vehicle control apparatus 313 may further transmit the prompt information generation instruction to the vehicle control network 320. The information analysis apparatus 314 may acquire the prompt information generation instruction through the vehicle control network 320. The information analysis apparatus 314, when receiving the prompt information generation instruction, determines whether the current instruction is successfully received. In response to the fact that the acquisition of the prompt information generation instruction by the information analysis apparatus 314 fails, the vehicle control apparatus 313 waits for a preset time such that the information analysis apparatus 314 can re-acquire the prompt information generation instruction or control the autonomous vehicle 110 to exit an unmanned mode (i.e. autonomous mode). The preset time may be 0.1 s, 0.2 s, 0.5 s, or the like, and the information analysis apparatus 314 may acquire the prompt information generation instruction at intervals of 0.1 s, for example. If the number of consecutive acquisition failures exceeds the preset number, the vehicle control apparatus 313 will control the autonomous vehicle 110 to exit the unmanned driving mode (i.e. autonomous driving mode) and enter the manual driving mode or the controlled driving mode to avoid potential danger caused by failure to output prompt information in time.

With continued reference to FIG. 3, the information analysis apparatus 314 comprises: a memory 314a and a querying module 314b. The memory 314a is configured to store a prompt information mapping table comprising a mapping relationship between a plurality of prompt information generation instructions and corresponding prompt information. The querying module 314b is configured to query the prompt information mapping table and determine the prompt information corresponding to the acquired prompt information generation instruction. The information mapping table comprises a prompt information generation instruction and a corresponding prompt information, wherein the prompt information represents prompt information which needs to be output subsequently and includes, but is not limited to, numbers, characters, icons, characters, signals and the like. After the information analysis apparatus 314 obtains the prompt information generation instruction, the corresponding prompt information may be obtained by querying the above information mapping table.

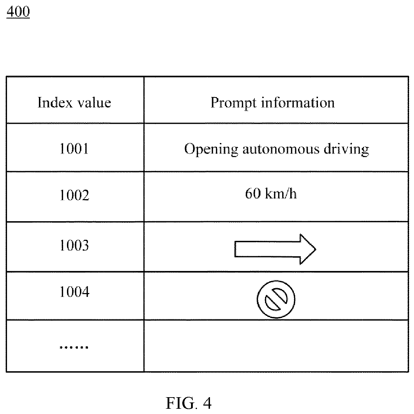

As described above, the acquired prompt information generation instruction contains multiple pieces of sub-data, wherein a piece of sub-data may include index values, and the above mapping relationship describes the mapping of a plurality of index values to corresponding prompt information. The querying module 314b is further configured to query the prompt information mapping table according to the index values in the acquired prompt information generation instruction and determine the prompt information corresponding to the acquired prompt information generation instruction. FIG. 4 shows a schematic diagram of a prompt information mapping table according to an embodiment of the present disclosure. As shown in FIG. 4, the prompt information mapping table is a table of mappings between prompt information and index values. As shown in FIG. 4, an index value 1001 indicates that the prompt information is "opening autonomous driving", an index value 1002 indicates that the prompt information is the current vehicle speed of 60 km/h, an index value 1003 indicates the prompt information for right turn of the autonomous vehicle 110, and an index value 1004 indicates the prompt information for temporary parking of the autonomous vehicle 110.

The information mapping table is stored in the memory of the information analysis apparatus 314 in the form of a file which can expand the prompt information indefinitely. The prompt information includes, but is not limited to, characters (for example, the prompt information corresponding to the index value 1001), icons (for example, the prompt information corresponding to the index values 1003 and 1004), and numbers (for example, the prompt information corresponding to the index value 1002); in other embodiments, the prompt information can also provide other rich prompt content, which is not listed herein. The difficult problem that the contents such as characters and icons cannot be represented at the vehicle control apparatus 313 can be well solved by setting the information mapping table and providing the index values for information correspondence. When the prompt information generation instruction is generated, the vehicle control apparatus 313 only needs to generate simple index values, so that the difficulty in generating data and the transmission quantity are greatly reduced, and the operation efficiency of the information prompt system is improved.

The acquired multiple pieces of sub-data of the prompt information generation instruction may further include check data; the check data may be located at a position of a header of the prompt information generation instruction, and the index value data may be provided after the check data. Therefore, when the information analysis apparatus 314 reads the prompt information generation instruction, a portion of the check data is first read. The information analysis apparatus 314 further comprises: a checking module 314c. The checking module 314c is configured to verify the correctness and the completeness of the index values in the acquired prompt information generation instruction according to the check data. Only when the checking module 314c determines that the index values in the prompt information generation instruction are correct and complete, the index value data are read. If the checking module 314c determines that the index values in the prompt information generation instruction are incorrect or incomplete, the instruction reading at this time may be cancelled, and after a period of time, the information analysis apparatus 314 re-acquires the prompt information generation instruction.

In an embodiment, the information analysis apparatus 314 comprises one or more processors coupled to the memory 314a. At least one of the processors comprises the querying module 314b and the checking module 314c. For example, the processors may execute instruction codes stored in the memory 314 to implement the querying module 314b and the checking module 314c.

With continued reference to FIG. 3, the information prompt apparatus 315 is in communication connection with the information analysis apparatus 314 and is configured to receive and present the prompt information. The information prompt apparatus 315 and the information analysis apparatus 314 may be connected directly by a signal line, or may be wirelessly connected, for example, by a local area network of the vehicle control network 320. The information prompt apparatus 315 comprises: a display 315a. The display 315a is arranged on an outer surface of the autonomous vehicle 110 and used for displaying the prompt information. The display may be an LED display, an OLED display or a liquid crystal display. To facilitate the display of the prompt information, the display 315a may comprise display panels respectively arranged on a plurality of side surfaces (e.g. four side surfaces) of the autonomous vehicle 110. That is, displays are disposed on all four side surfaces of the autonomous vehicle 110 such that vehicles or pedestrians in all directions of the autonomous vehicle 110 can observe the prompt information.

It needs to be added that, besides the display prompt information listed in the information mapping table shown in FIG. 4, the prompt information may also be related sound prompt information or light prompt information. Accordingly, the information prompt apparatus 315 may further comprise a sounder 315b and an illuminator 315c. The sounder 315b may be a speaker, a horn, or the like. The illuminator 315c may be a single or a group of signal lights, and may also be a light projection apparatus capable of adjusting the posture of the light. For example, in some embodiments, the prompt information of the autonomous vehicle 110 may be divided into a dangerous level and a non-dangerous level, and if the prompt information is a dangerous level, the illuminator 315c in the information prompt apparatus 315 will display a red light, and the sounder 315b will send an audible alarm. If it is a non-dangerous level, the illuminator 315c displays a green light. In other embodiments, however, the prompt may be made by using different lighting colors or different sounds according to other scene classifications.

In some embodiments, in order to increase the prompt effect of the information prompt apparatus 315, the display 315a of the information prompt apparatus 315 may be set to flash, so that the third party may play a better prompt effect when the attention of the pedestrians and the vehicles is not focused enough.

In some embodiments, in order to address the case where oncoming vehicles and pedestrians are unable to observe the information prompt apparatus 315 on a curved road, the sounder 315b of the information prompt apparatus 315 may prompt by playing "notice to avoid" when approaching a curve.

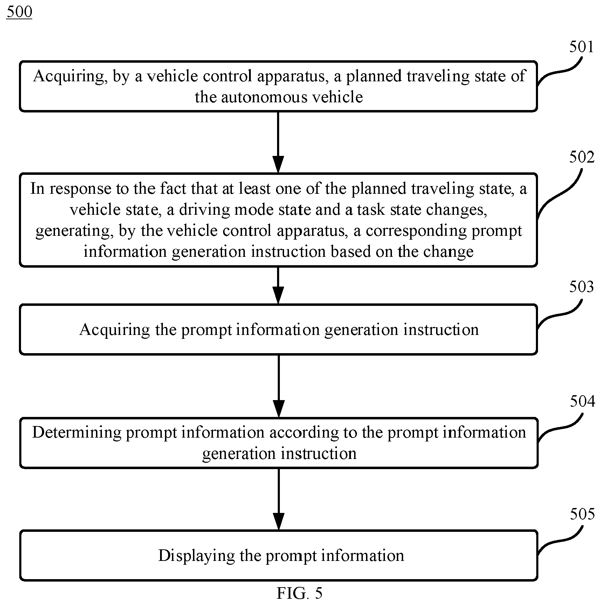

According to another aspect of the present disclosure, further provided is an information prompt method for an autonomous vehicle 110. FIG. 5 shows a flowchart of an information prompt method 500 for an autonomous vehicle 110 according to an embodiment of the present disclosure; as shown in FIG. 5, the method 500 comprises:
step 501, acquiring, by a vehicle control apparatus, a planned traveling state of the autonomous vehicle 110;
step 502, in response to the fact that at least one of the planned traveling state, a vehicle state, a driving mode state and a task state changes, generating, by the vehicle control apparatus, a corresponding prompt information generation instruction based on the change;
step 503, acquiring, by the information analysis apparatus from the vehicle control apparatus, the prompt information generation instruction;
step 504, determining, by the information analysis apparatus, prompt information according to the prompt information generation instruction; and
step 505, displaying, by the information prompt apparatus, the prompt information.

Steps 501-505 in the method 500 may be performed by the apparatus in the information prompt system 200 shown in FIG. 2 and the information prompt system 300 shown in FIG. 3.

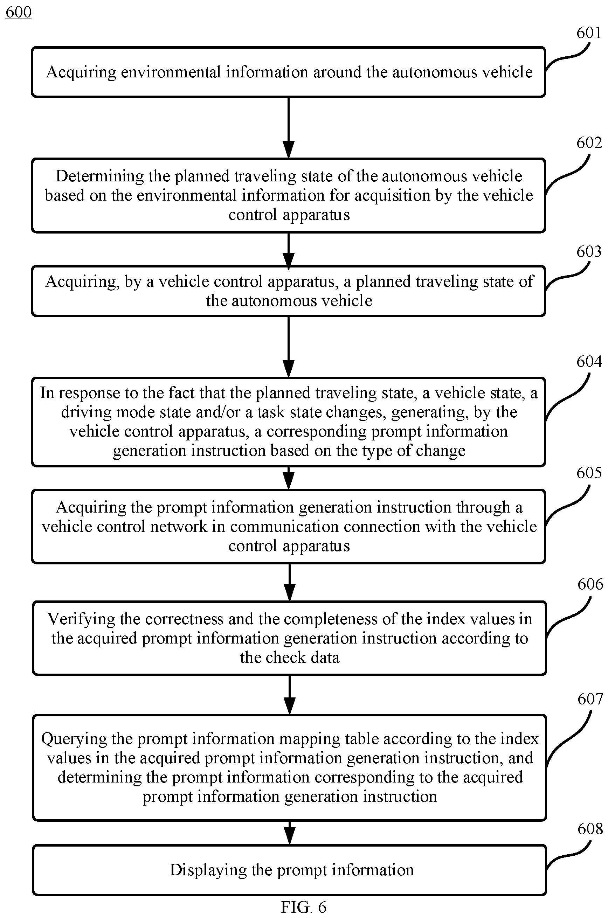

FIG. 6 shows a flowchart of an information prompt method 600 for an autonomous vehicle 110 according to another embodiment of the present disclosure; as shown in FIG. 6, the method 600 comprises:
step 601, acquiring, by the environmental information acquisition apparatus, environmental information around the autonomous vehicle 110;
step 602, determining, by the computing apparatus, the planned traveling state of the autonomous vehicle 110 based on the environmental information for acquisition by the vehicle control apparatus;
step 603, acquiring, by a vehicle control apparatus, a planned traveling state of the autonomous vehicle 110;
step 604, in response to the fact that the planned traveling state, a vehicle state, a driving mode state and/or a task state changes, generating, by the vehicle control apparatus, a corresponding prompt information generation instruction based on the type of change;
step 605, acquiring, by the information analysis apparatus from the vehicle control apparatus, the prompt information generation instruction through the vehicle control network in communicative connection with the vehicle control apparatus;
step 606, verifying, by the information analysis apparatus, the index values in the acquired prompt information generation instruction according to the check data;
step 607, querying, by the information analysis apparatus, the prompt information mapping table according to the index values in the acquired prompt information generation instruction, and determining the prompt information corresponding to the acquired prompt information generation instruction; and
step 608, after the information analysis apparatus determines prompt information according to the prompt information generation instruction, displaying, by the information prompt apparatus, the prompt information.

As shown in step 601 and step 602 of FIG. 6, in some embodiments, before in response to the change in the planned traveling state, a corresponding prompt information generation instruction is generated by the vehicle control apparatus based on the type of change, environmental information around the autonomous vehicle 110 is acquired; and the planned traveling state of the autonomous vehicle 110 is determined based on the environmental information for acquisition by the vehicle control apparatus.

In some embodiments, as shown in step 605 of FIG. 6, acquiring the prompt information generation instruction comprises: acquiring the prompt information generation instruction through a vehicle control network in communicative connection with the vehicle control apparatus.

In some embodiments, acquiring the prompt information generation instruction through a vehicle control network in communication connection with the vehicle control apparatus comprises: in response to the fact that the acquisition of the prompt information generation instruction fails, waiting for a preset time, and then re-acquiring the prompt information generation instruction or controlling the autonomous vehicle 110 to exit an unmanned mode (i.e. autonomous mode).

In some embodiments, determining prompt information according to the prompt information generation instruction comprises: querying a pre-stored prompt information mapping table according to the acquired prompt information generation instruction, and determining the prompt information corresponding to the prompt information generation instruction, wherein the prompt information mapping table comprises a mapping relationship between a plurality of prompt information generation instructions and a plurality pieces of corresponding prompt information.

In some embodiments, the acquired prompt information generation instruction comprises check data. As shown in step 606 of FIG. 6, before the prompt information mapping table is queried according to the index values in the acquired prompt information generation instruction and the prompt information corresponding to the acquired prompt information generation instruction is determined, the correctness and the completeness of the index values in the acquired prompt information generation instruction are verified according to the check data.

In some embodiments, the acquired prompt information generation instruction comprises index values, and the mapping relationship describes the mapping of a plurality of index values to corresponding prompt information. As shown in step 607 of FIG. 6, querying a pre-stored prompt information mapping table according to the acquired prompt information generation instruction, and determining the prompt information corresponding to the prompt information generation instruction further comprises: querying the prompt information mapping table according to the index values in the acquired prompt information generation instruction, and determining the prompt information corresponding to the acquired prompt information generation instruction.

Steps 601-608 in the method 600 are similar to the operation method of the apparatus in the information prompt system 300 shown in FIG. 3, and are not repeated herein.

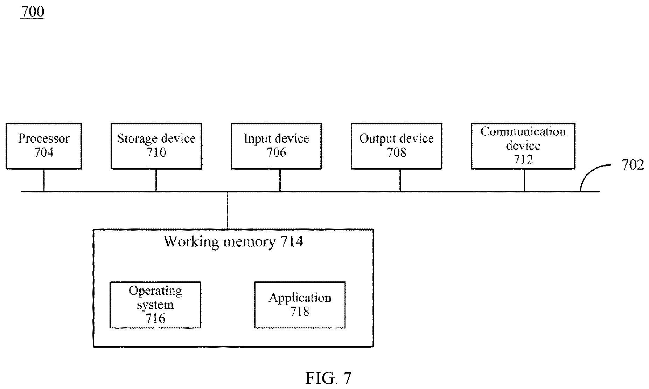

Referring to FIG. 7, a computing device 700 will now be described, which is an example of a hardware device that may be applied to various aspects of the present disclosure, such as the information analysis apparatus 314 and the computing apparatus 317 that may be applied in the embodiment of FIG. 3. The computing device 700 may be any machine configured to perform processing and/or computing, and may include, but is not limited to, a workstation, a server, a desktop computer, a laptop computer, a tablet computer, a personal digital assistant, a smartphone, an on-board computer, or any combination thereof. The above computing apparatus and/or information analysis apparatus may be implemented, in whole or at least in part, by the computing device 700 or a similar device or system.

The computing device 700 may comprise components connected to a bus 702 (possibly via one or more interfaces) or in communication with the bus 702. For example, the computing device 700 may comprise a bus 702, one or more processors 704, one or more input devices 706, and one or more output devices 708. The one or more processors 704 may be any type of processor and may include, but are not limited to, one or more general-purpose processors and/or one or more special-purpose processors (e.g., special processing chips). The input device 706 may be any type of device capable of inputting information to the computing device 700 and may include, but is not limited to, a mouse, a keyboard, a touch screen, a microphone, and/or a remote control. The output device 708 may be any type of device capable of presenting information and may include, but is not limited to, a display, a speaker, a video/audio output terminal, a vibrator, and/or a printer. The computing device 700 may also include, or be connected with, a non-transitory storage device 710 which may be any storage device that is non-transitory and that can realize data storage, and may include, but is not limited to, a disk drive, an optical storage device, a solid state memory, a floppy disk, a flexible disk, a hard disk, a magnetic tape, or any other magnetic medium, an optical disk or any other optical medium, ROM (read-only memory), RAM (random access memory), a cache and/or any other memory chip or cartridge, and/or any other medium from which a computer can read data, instructions, and/or codes. The non-transitory storage device 710 may be removable from the interface. The non-transitory storage device 710 may have data/programs (including instructions)/codes for implementing the above methods and steps. The computing device 700 may further include a communication device 712. The communication device 712 may be any type of device or system that enables communication with external devices and/or with a network and may include, but is not limited to, a modem, a network card, an infrared communication device, a wireless communication device, and/or a chipset, for example, a bluetooth ^{™} device, an 802.11 device, a WiFi device, a WiMax device, a cellular communication device, and/or the like.

The computing device 700 may further comprise a working memory 714, which may be any type of working memory that can store programs (including instructions) and/or data useful to the operation of the processor 704, and which may include, but is not limited to, a random access memory and/or a read-only memory device.

Software elements (programs) may be located in the working memory 714 including, but not limited to, an operating system 716, one or more application programs 718, drivers, and/or other data and codes. The instructions for implementing the above methods and steps may be included in the one or more application programs 718, and the above computing apparatus or the information analysis apparatus may be implemented by the instructions of the one or more application programs 718 being read and executed by the processor 704. More specifically, the aforementioned computing apparatus may be implemented, for example, by the processor 704 executing the application program 718 having instructions for executing steps 601-602. Furthermore, the aforementioned information analysis apparatus may be implemented, for example, by the processor 704 executing the application program 718 having instructions for executing steps 606-607. Executable codes or source codes for the instructions of the software elements (programs) may be stored in a non-transitory computer-readable storage medium (such as the storage device 710), and when executed, may be stored in the working memory 714 (possibly compiled and/or mounted). Executable codes or source codes for the instructions of the software elements (programs) may also be downloaded from a remote location.

It should also be understood that various modifications may be made according to particular requirements. For example, customized hardware may also be used and/or particular elements may be implemented in hardware, software, firmware, middleware, microcode, hardware description languages, or any combination thereof. For example, some or all of the disclosed methods and devices may be implemented by programming hardware (e.g., programmable logic circuitry including field programmable gate arrays (FPGAs) and/or programmable logic arrays (PLAs)) in an assembly language or hardware programming language (such as, VERILOG, VHDL, C + +) using logic and algorithms according to the present disclosure.

While embodiments or examples of the present disclosure have been described with reference to the accompanying drawings, it should be understood that the above-described methods, systems and devices are merely illustrative embodiments or examples, and that the scope of the present invention is not limited by these embodiments or examples, but only limited by the claims as granted and equivalents thereof. Various elements in the embodiments or examples may be omitted or may be replaced with equivalents thereof. Further, the steps may be performed in an order different from that described in the present disclosure. Further, the various elements in the embodiments or examples may be combined in various ways. All that matters is that as technology evolves, many of the elements described herein may be replaced by equivalent elements that appear after the present disclosure.

## Claims

1. An information prompt system for a vehicle, comprising:
a vehicle control apparatus, configured to:
acquire a planned traveling state of the vehicle;
control the vehicle to enter the planned traveling state; and
in response to at least one of the planned traveling state, a vehicle state, a driving mode state and a task state being changed, generate a prompt information generation instruction based on the change,
an information analysis apparatus, configured to:
acquire the prompt information generation instruction; and
determine prompt information corresponding to the prompt information generation instruction, and
an information prompt apparatus, configured to:
display the prompt information.

2. The information prompt system according to claim 1, wherein the information analysis apparatus comprises:
a memory, configured to store a prompt information mapping table comprising a mapping relationship between a plurality of prompt information generation instructions and corresponding prompt information; and
a querying module, configured to query the prompt information mapping table to determine the prompt information corresponding to the acquired prompt information generation instruction.

3. The information prompt system according to claim 2, wherein:
the acquired prompt information generation instruction comprises an index value,
the mapping relationship describes mapping of a plurality of index values to corresponding prompt information, and
the querying module is further configured to query the prompt information mapping table according to the index value in the acquired prompt information generation instruction so as to determine the prompt information corresponding to the acquired prompt information generation instruction.

4. The information prompt system according to claim 3, wherein:
the acquired prompt information generation instruction further comprises check data, and
the information analysis apparatus further comprises:
a checking module, configured to verify the index value in the acquired prompt information generation instruction according to the check data.

5. The information prompt system according to any one of claims 1 to 4, further comprising:
an environmental information acquisition apparatus, configured to acquire environmental information around the vehicle; and
a computing apparatus, configured to determine the planned traveling state of the vehicle based on the environmental information acquired by the environmental information acquisition apparatus.

6. The information prompt system according to any one of claims 1 to 5, wherein:
the information analysis apparatus is in communication connection with the vehicle control apparatus via a vehicle control network, and
the information analysis apparatus acquires the prompt information generation instruction through the vehicle control network.

7. The information prompt system according to any one of claims 1 to 6, wherein the vehicle is an autonomous vehicle and the vehicle control apparatus is further configured to:
in response to the information analysis apparatus failing in acquiring the prompt information generation instruction, wait for a preset time such that the information analysis apparatus can re-acquire the prompt information generation instruction or control the autonomous vehicle to exit an autonomous mode.

8. The information prompt system according to any one of claims 1 to 7, wherein the information prompt apparatus comprises:
a display, arranged on an outer surface of the vehicle and configured to display the prompt information.

9. An information prompt method for a vehicle, comprising:
acquiring, by a vehicle control apparatus, a planned traveling state of the vehicle;
in response to at least one of the planned traveling state, a vehicle state, a driving mode state and a task state being changed, generating, by the vehicle control apparatus, a prompt information generation instruction based on the change;
acquiring, by an information analysis apparatus from the vehicle control apparatus, the prompt information generation instruction;
determining, by the information analysis apparatus, prompt information according to the prompt information generation instruction; and
displaying, by an information prompt apparatus, the prompt information.

10. The information prompt method according to claim 9, wherein determining, by the information analysis apparatus, prompt information according to the prompt information generation instruction comprises:
querying, by the information analysis apparatus, a pre-stored prompt information mapping table according to the acquired prompt information generation instruction, to determine the prompt information corresponding to the prompt information generation instruction,
wherein the prompt information mapping table comprises a mapping relationship between a plurality of prompt information generation instructions and a plurality pieces of corresponding prompt information.

11. The information prompt method according to claim 10, wherein:
the acquired prompt information generation instruction comprises an index value,
the mapping relationship describes mapping of a plurality of index values to corresponding prompt information, and
querying, by the information analysis apparatus, the pre-stored prompt information mapping table according to the acquired prompt information generation instruction, to determine the prompt information corresponding to the prompt information generation instruction comprises:
querying, by the information analysis apparatus, the prompt information mapping table according to the index value in the acquired prompt information generation instruction, to determine the prompt information corresponding to the acquired prompt information generation instruction.

12. The information prompt method according to claim 11, wherein:
the acquired prompt information generation instruction further comprises check data, and
the method further comprises:
before querying the prompt information mapping table according to the index value in the acquired prompt information generation instruction, verifying, by the information analysis apparatus, the index value in the acquired prompt information generation instruction according to the check data.

13. The information prompt method according to any one of claims 9 to 12, further comprising:
acquiring, by an environmental information acquisition apparatus, environmental information around the vehicle; and
determining, by a computing apparatus, the planned traveling state of the vehicle based on the acquired environmental information.

14. The information prompt method according to any one of claims 9 to 13, wherein the vehicle is an autonomous vehicle and the method further comprising:
in response to the information analysis apparatus failing in acquiring the prompt information generation instruction, waiting, by the vehicle control apparatus, for a preset time such that the information analysis apparatus can re-acquire the prompt information generation instruction or controlling, by the vehicle control apparatus, the autonomous vehicle to exit an autonomous mode.

15. A vehicle, comprising the information prompt system according to any one of claims 1 to 8.
